Europäisches Patentamt

European Patent Office

Office européen des brevets

(11) Publication number: **0 642 245 A1**

# EUROPEAN PATENT APPLICATION

(21) Application number: **94202429.0**

(22) Date of filing: **24.08.94**

(51) Int. Cl.⁶: **H04L 27/34**

(30) Priority: **31.08.93 US 114545**

(43) Date of publication of application:
**08.03.95 Bulletin 95/10**

(84) Designated Contracting States:
**DE ES FR GB IT**

(71) Applicant: **PHILIPS ELECTRONICS N.V.**
**Groenewoudseweg 1**
**NL-5621 BA Eindhoven (NL)**

(72) Inventor: **Bryan, David Alan, c/o**
**Int.Octrooibureau B.V.**
**Prof. Holstlaan 6**
**NL-5656 AA Eindhoven (NL)**
Inventor: **Basile, Carlo, c/o Int.Octrooibureau**
**B.V.**
**Prof. Holstlaan 6**
**NL-5656 AA Eindhoven (NL)**
Inventor: **Hulyalkar, Samir Narayan, c/oInt.**
**Octrooib. B.V.**
**Prof. Holstlaan 6**
**NL-5656 AA Eindhoven (NL)**

(74) Representative: **De Jongh, Cornelis**
**Dominicus**
**INTERNATIONAAL OCTROOIBUREAU B.V.,**
**Prof. Holstlaan 6**
**NL-5656 AA Eindhoven (NL)**

(54) Digital transmission system and method.

㊐ A method and apparatus for transmitting a digital television signal using a 128 point constellation comprised of four 32 point quadrants which are each processed using the same coding techniques as the single 32 QAM ATRC "simulcast" system, in order, for example to provide a clear migration path to a higher data rate progressive scan system. At the receiver, the four 32 QAM quadrants of the 128 QAM constellation of the instant invention are each identically decoded. Additional data is also provided to choose which quadrant is to be processed. In this manner, receivers deployed at the start of HDTV broadcasting will be compatible with the future broadcast signal and will continue to process and display images.

EP 0 642 245 A1

Rank Xerox (UK) Business Services
(3.10/3.09/3.3.4)

The invention is related to a digital transmission system comprising a transmitter provided with a quadrature amplitude modulator for deriving a quadrature amplitude modulated signal using a first signal constellation from a digital signal, a channel for transmitting said quadrature amplitude modulated signal to at least one receiver, said receiver comprising a quadrature amplitude demodulator for deriving a demodulated digital signal from the received quadrature amplitude modulated signal. The invention is also related to a transmitter and a receiver for use in such a transmission system, and is further related to a transmission and receiving method.

Such a transmission system and method are known from the article "ATRC's all-digital HDTV proposal, by L.W. Lockwood in Communications Technology, June 1991.

The Federal Communications Commission and cable television testing organizations such as Cable Labs, have been evaluating digital television delivery systems in order to choose a new television "standard" which someday will replace NTSC in the United States. These systems all involve digital coding and data compression techniques, for example those utilizing the MPEG algorithm or variations thereof. MPEG is discussed in U.S. serial No. 774,006, filed October 8, 1991, and in ISO/IEC/JTC1/SC29/WG11 MPEG-2 Working Draft #3, July 16, 1993, both of which are incorporated by reference herein.

Several systems, such as those demonstrated by the Advanced Television Research Consortium and the American Television Alliance, propose using quadrature amplitude modulation (QAM) or Vestigial Sideband (VSB) modulation techniques in the transmission of the coded television information. QAM has demonstrated robust performance during the tests conducted by the ATTC (Advanced Television Testing Committee).

The FCC plans to test and approve an HDTV standard for terrestrial broadcasting in 1994. Although the specifics of the standard are yet to be fully tested and agreed upon, the FCC has indicated that the system will initially take the form of a so called "simulcast" approach. The new HDTV signals will have to fit into currently unused television channels (so called "taboo" channels) and initially co-exist with conventional analog television signals without co-channel interference.

NTSC will be used hereinafter to represent one example of conventional television broadcasting. Other examples would be SECAM and PAL. Although NTSC is exemplified herein, it is not meant to be construed as a limitation and will be used herein synonymously with "conventional" to represent conventional television in general.

The ATRC system features spectral shaping by the use of quadrature amplitude modulation (QAM) of twin subcarriers which are disposed in frequency to minimize interference to and from an NTSC co-channel signal. Each of the subcarriers uses a 32 point constellation to encode five bits of data into each complex symbol transmitted on the channel.

In order to minimise or prevent co-channel interference, the system chosen by the FCC will have to maximise the use of the available bandwidth. For this reason, systems proposed thus far have only proposed the transmission of 1050 interlaced lines of resolution or 787.5 progressive lines of resolution at a 60 frame/second rate.

Because of the channel interference due to the frequency re-use implied by "simulcasting", true high resolution progressive transmission will be difficult at a 60 frame/second rate. The FCC intends however, to end NTSC broadcasting at some, yet to be chosen, date after introduction of HDTV. It is expected that by the time a genuine market need for progressively scanned high definition video material is established, the NTSC transmissions will have been ended. At that time, all of the existing NTSC channels will be reassigned for HDTV service. This will remove the limitation currently in place on the transmission characteristics of the HDTV signal, allowing the migration from the proposed QAM systems (for example 32 QAM using a 32 point constellation QAM modem) to a higher capacity QAM system (for example a 128 QAM using a 128 point constellation QAM modem) which can be utilized to provide information which can augment the interlaced HDTV signal or provide high resolution progressively scanned programming. Similar migration is possible from a "simulcast" multilevel VSB system to a higher capacity VSB system (for example from a 4VSB system to an 8VSB system).

One object of the instant invention, is to design a transmission system which can be used as part of a "simulcast" standard while conventional broadcasting continues, but which can easily be upgraded to a higher level when "simulcast" ends.

Therefor the transmission system is characterised in that the quadrature amplitude modulator comprises means for forming first data portions from the digital signal and means for deriving the quadrature amplitude modulated signal by modulating said first data portion using a second signal constellation having fewer points than said first signal constellation utilizing second data portions representing a respective quadrant within said first constellation in which said second constellation is disposed, and in that the demodulator comprises means for deriving a replica of said first data portions and a replica of said second data portions

2

from said modulated signal.

The instant invention provides for the increased transmission capacity which future HDTV transmissions will be able to take advantage of (after "simulcasting" ends) by expanding the modem constellation size from e.g the currently proposed 32 point QAM constellation to 128 QAM. The first constellation e.g. comprises a 128 QAM constellation which features four quadrants, each comprising the second constellation e.g. a 32 QAM constellation with rate 0.9 set-partition or trellis coding. There is one additional bit per 2 symbols, or 4.5 bits per symbol. If the second constellation uses the same trellis encoding/decoding scheme as proposed in a "simulcast" system, the HDTV system provides additional two uncoded bits per symbol, i.e. 6.5 bits/symbol, for a transmitted bit rate improvement of 6.5/4.5 or 44%, as compared to the "simulcast" system. The two added bits select one of the four quadrants. This additional data rate is more than sufficient to encode the progressive scan high definition video which can be used after the end of NTSC broadcasting. The additional data rate can also be used to provide other forms of enhanced services to the "simulcast" signal.

For a 4VSB system, which has 4b/s/Hz (because it has 2 bits/symbol and its bandwidth is halved using the VSB filter), the migration can be made to 8VSB which has 6b/s/Hz (3 bits/symbol). Hence, for this case the transmitted bit-rate improvement is 6/4 of 50%. For VSB, the invention features two sets (instead of four quadrants) each comprising the original 4VSB constellation. An extra bit is used to select one of the two sets.

Because the 128 point constellation of one QAM embodiment of the instant invention utilizes four offset 32 point constellations which are each processed using the same coding techniques as the non-offset 32 QAM constellation used in the "simulcast" system, a clear migration path to the future higher capacity HDTV signal is provided.

Additional advantages of the instant invention is that is possible to provide a television receiver which will receive the "simulcast" HDTV broadcast and remain compatible with future HDTV systems which will provide augmentation information to new generations of receivers capable of receiving and processing this information. It is further possible to obtain a transmission system which will enable HDTV set manufacturers to design television receivers today which will receive and display the "simulcast" HDTV signal, and also receive and display the higher level, i.e. progressively scanned transmissions, of the future.

A first feature of one embodiment of the invention is the use of a QAM constellation having n points to transmit an improved HDTV signal, where n is a first real number equal to a multiple of a second real number of points, m, which represents the number of points in the QAM constellation chosen to be implemented in the FCC "simulcast" signal.

Another feature of the invention is a transmission system which utilizes the added capacity to transmit information which can be used by an advanced HDTV receiver to supplement the interlaced scanned signal provided by the "simulcast" HDTV signal.

Still another feature of the invention is a receiver which, though designed to receive only the "simulcast" HDTV signal, can continue to be used to receive the advanced HDTV signal when it replaces the "simulcast" signal.

Another feature of the invention provides for a television receiver which can be manufactured to receive both the "simulcast" signal when implemented by the FCC and the future advanced higher data rate (e.g. progressive) signal which will be implemented when "simulcast" ends.

For example, the 128 QAM constellation of the preferred QAM embodiment of the invention described herein, comprises four 32 QAM quadrants which are each identically decoded. Additional data is also provided to choose which quadrant is to be processed. In this manner, simple decoding circuitry can be added to all receivers which will choose a non-offset 32 QAM constellation to process "simulcast" signals, but will also be able to decode four offset 32 QAM constellations when needed, to process the additional information transmitted, e.g. progressive scan video, when such transmissions replace the simulcast 32 QAM system when NTSC broadcasting ends. Alternatively, the additional data could be transmitted as augmentation information which is coded on three of the four quadrants with the "simulcast" signal always being coded in the fourth quadrant, thus providing an upgradable transmission system without "simulcast" TV receivers obsolete when "simulcast" HDTV and NTSC are replaced by an added capacity "advanced" HDTV signal.

Similarly for 4VSB, the extra information can be obtained by decoding the 8VSB system, which can be used for progressive information.

Of course, interlaced "simulcast" sets will not be able to display the progressive scan information as transmitted using 128 QAM and appropriate post processing will be necessary to display the received signal in interlaced form. All sets however, will at least be able to receive and provide an output from the higher level transmissions when they become a reality.

The embodiments described herein relate to transmission systems designed for terrestrial broadcasting. It should be noted however, that the invention is not limited to such systems and can equally be used in cable, microwave, DBS and recording/playback systems as well. "Transmission" as defined herein, is therefore intended to encompass all forms of transmission/reception and/or recording/playback.

Figure 1 is a block diagram of an encoder comprising the invention;

Figure 2 describes a 128 point complex signal constellation comprising the invention; and

Figure 3 is a block diagram of a receiver comprising the invention.

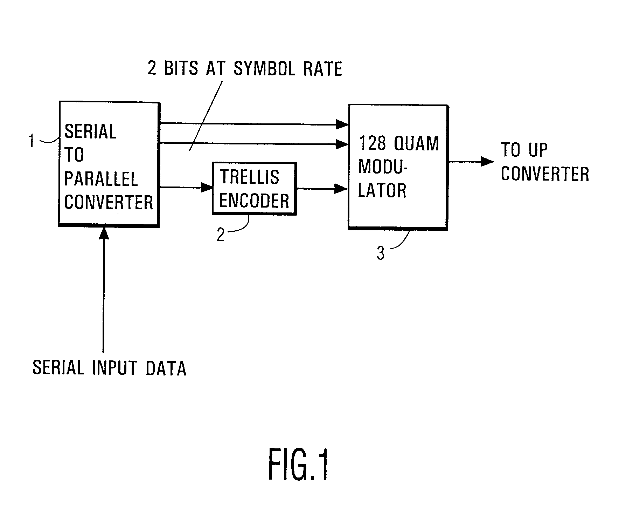

Figure 1 shows a block diagram of one embodiment of a 128 QAM encoder comprising the invention. Using known encoding methods, such as those described in the references incorporated herein, video and audio sources are converted to digital data, compressed and multiplexed with auxiliary information and forward error correction data into a serial data stream. The serial data enters serial-to-parallel converter 1, where it is formed into first and second data portions representing symbols to be transmitted.

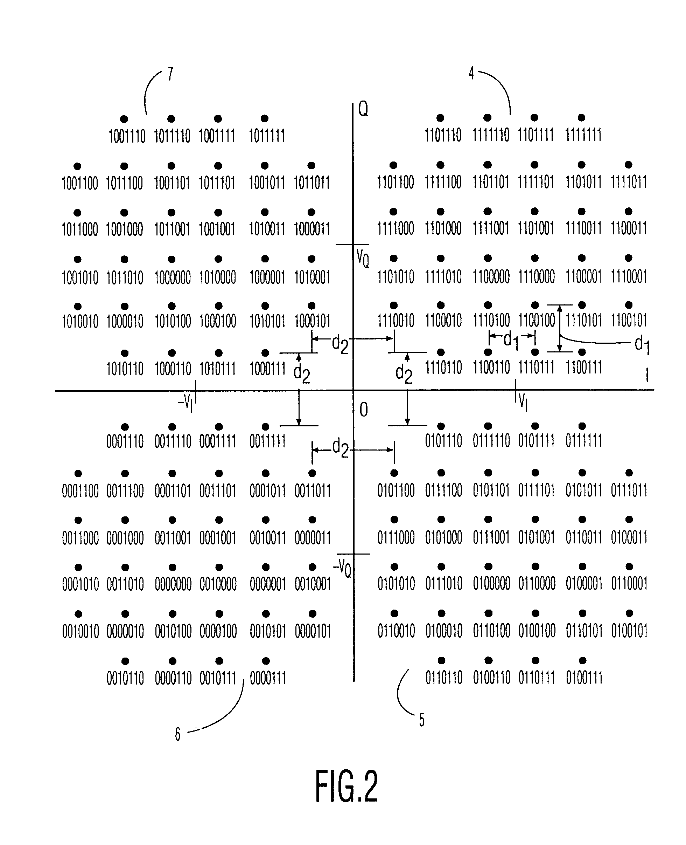

In accordance with one embodiment of the invention, second data portions for selecting a quadrant within the 128 QAM constellation shown in Fig. 2, are added to the serial input data stream provided to serial to parallel converter 1. The quadrant selection data can be combined with the serial data words as provided by the HDTV system proposed by the ATRC (as described in "Advanced Digital High Definition Television- System Specification published by the Advanced Television Research Consortium at January 1992, being incorporated by reference herein), and two bits signifying the quadrant are provided at every symbol time while nine bits are output at intervals of two symbol times.

The second data portions comprising two quadrant selection bits of each word pass from serial to parallel converter 1 directly to the 128 QAM Modulator 3 and the remaining bits are processed by a trellis coder 2. Trellis coding is used to protect the first data portions to be mapped into 32 QAM constellation points. Each 32 QAM complex symbol can carry five bits of information. Since the input data stream flowing to the trellis coder 2 from the serial to parallel converter 1 is at a rate of four and a half bits/symbol time, the excess capacity of one half of a bit/symbol time is used to introduce redundancy that permits error correction to take place at a receiver. Trellis coder 2, outputs therefore, ten bits of information for every nine bits which are input from serial to parallel converter 1.

The constellation for the 128 QAM signal is shown in Figure 2, along with the mapping of symbol bits from trellis coder 2, to respective constellation points which is performed by 128 QAM modulator 3 of Figure 1.

The 128 QAM constellation of the invention is configured by placing each of four 32 QAM constellations into respective quadrants 4, 5, 6 and 7. The two most significant bits, which are the two bits provided directly to the 128 QAM modulator from serial to parallel converter 1, select the quadrant in which the five least significant bits, which represent the 32 QAM symbols provided by the trellis encoder 2, will be placed.

The 128 QAM modulator 3 outputs a Q signal and an I signal which are up converted and transmitted as described in the references incorporated herein.

At a receiver, I and Q signals are received and using the logic rules shown in Table I the values of the second data portions representing the two most significant bits (MSBs) of data words of the digital signal are determined which also determines the quadrant for which the 32 QAM symbols are coded for that data word.

TABLE I

| I | Q | Two MSBs | Quadrant |
|----|----|----|----|
| >0 | >0 | 11 | 4 |
| >0 | <0 | 01 | 5 |
| <0 | >0 | 10 | 7 |
| <0 | <0 | 00 | 6 |

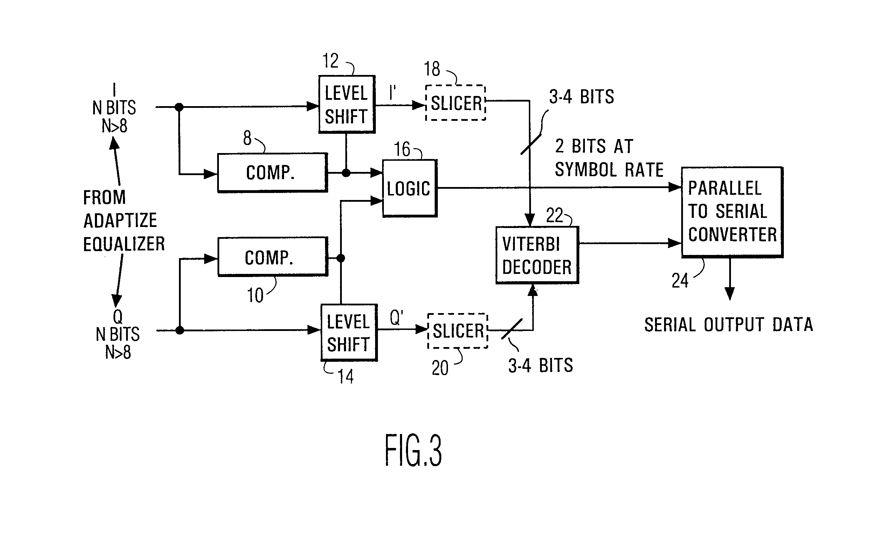

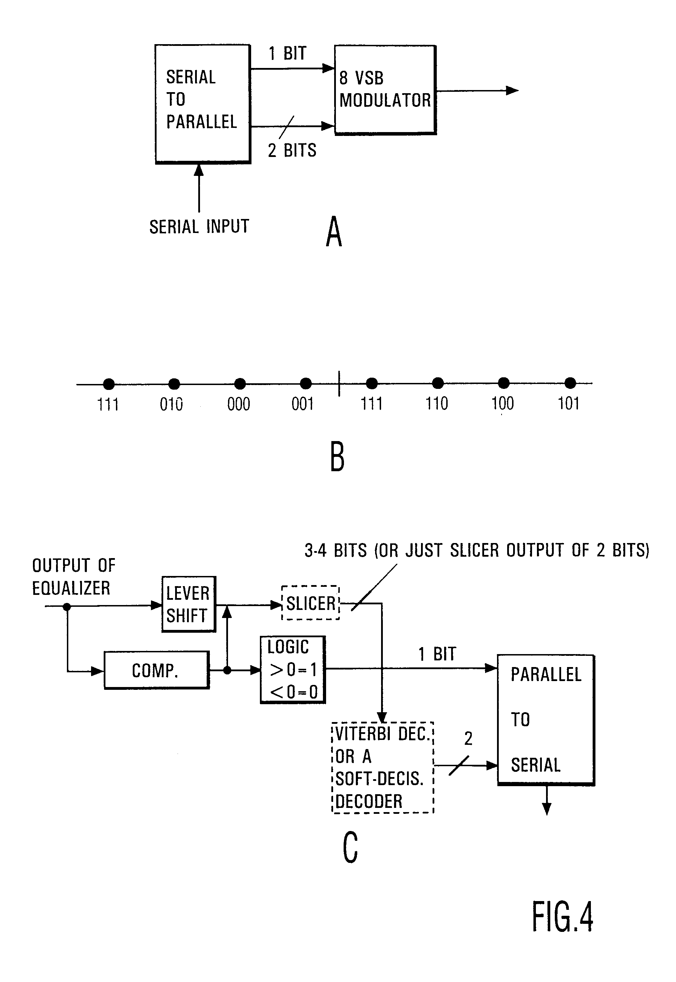

Figure 3 shows a block diagram of a receiver which utilizes the currently proposed ATRC 32 QAM HDTV signal and the future 128 QAM HDTV signal coded in accordance with the invention. A conventional QAM receiver architecture including an adaptive equalizer, as described in the references incorporated herein, can be used to receive an HDTV signal coded in accordance with the invention and to provide there from I and Q signals having values which are represented by N bits where N is > eight bits.

The I and Q signals enter two comparators 8 and 10 respectively, whose function is to test whether or not each I or Q signal is greater or less than zero. Based on these two comparisons, the two most significant bits of the transmitted symbol can be determined by the logic unit 16 according to the rules

4

shown in Table I.

The means for determining a further modulated signal being here two level shifters 12 and 14, are used to spatially re-center the selected one of the four possible 32 point constellations comprising the 128 point constellation represented by each I and Q signal combination, so that its origin I,Q = (0,0). For level shifter 12 this is expressed as:

If I > 0, then I' = I - VI
If I < 0, then I' = I + VI;

and for level shifter 14, as:

If Q > 0, then Q' = Q - VQ
If Q < 0, then Q' = Q + VQ; and

where VI is a spatial value which is halfway along the I axis of quadrants 4 and 5, -VI is a spatial value which is halfway along the I axis of quadrants 7 and 6, VQ is a spatial value which is halfway along the Q axis of quadrants 7 and 4 and -VQ is a spatial value which is halfway along the Q axis of quadrants 6 and 5, as shown on Fig. 2 and VI = VQ.

The I and Q signals from the adaptive equalizer are quantized to > 8 bits. However, it is well known that for trellis decoding as performed by Viterbi decoder 22 it is not necessary to retain more than 3-4 bits for near-optimal performance, therefore the I' and Q' signal values can be truncated in slicers 18 and 20 respectively before being provided to the Viterbi decoder 22. A suitable Viterbi decoder is manufactured by Qualcomm, Inc., San Diego, California, and is described in Application Note AN1650-2, published by Qualcomm, Inc., the contents of which is incorporated by reference herein.

The Viterbi decoder 22 outputs its best approximation of the least significant bits (LSBs) of the transmitted symbol to parallel to serial converter 24. This will be nine bits at intervals of two symbol times. The parallel to serial converter 24, using the additional MSBs provided by logic unit 16 to identify the quadrant the LSBs belong to, then outputs a serial stream of data representing the receiver's best approximation of the data encoded by the encoder of Fig. 1.

As shown in Figure 2, the two MSBs of a symbol may be received more robustly (have "higher priority") if the distance d2 is made greater than the distance d1. This may be advantageous in the transmission of compressed digital video as there is generally some information that is more important than other information. The more important information can be sent on the two MSBs with d2 > d1. For example we could have:

(2 bits/symbol divided by 6.5 bits/symbol) = 31% high priority data in the ATRC example described above. In the case where d2 > d1 we have:

VI = VQ = 0.5 (d2 + 5*d1)
whereas, if d2 = d1, VI = VQ = 3*d1

The receiver must be able to switch in a seamless fashion when the service is changed from 32 QAM to 128 QAM. This could be done in a number of ways. The simplest is by trial and error. If the modem finds that it suddenly has a lot of errors and after repeated resets, the performance is not improved then it will switch over to the 128 QAM mode. The other technique is by use of the 'rate sequence' proposed in ????????????. The information about what modulation is currently being used can be provided by using the 'rate sequence'. Another technique is by noting that when 128 QAM is sent there is almost no energy in the region around the origin. Thus a frequency counter can be used to detect the number of occurrences of the four constellation points around the origin for the 32 QAM constellation and if this on the average has a much smaller probability than the rest of the points, then it can be concluded that the service has changed to 128 QAM.

The above embodiment focuses on extending the existing HDTV proposals of the ATRC to higher level progressive scanning systems, however the same ideas can be implemented in connection for example, with the QAM "simulcast" proposal by General Instrument and any suitable trellis code can be used with the proposed scheme. This is to say that since the essence of the idea is to create a constellation with four times the number of points by combining four spatially offset versions of a smaller constellation, any applicable constellation can be used to form each quadrant and is not limited to 32 QAM. For example, if the data rate is sufficient, we might have a 16 QAM constellation within each quadrant, or an overall 64 QAM constellation.

The invention is also compatible with the multiplexed QAM scheme described in the parent application. For example we could have 64 QAM for audio data and 128 QAM for video data, for more robust audio.

**Claims**

1.  Digital transmission system comprising a transmitter provided with a quadrature amplitude modulator for deriving a quadrature amplitude modulated signal using a first signal constellation from a digital signal, a channel for transmitting said quadrature amplitude modulated signal to at least one receiver, said receiver comprising a quadrature amplitude demodulator for deriving a demodulated digital signal from the received quadrature amplitude modulated signal, characterised in that the quadrature amplitude modulator comprises means for forming first data portions from the digital signal and means for deriving the quadrature amplitude modulated signal by modulating said first data portion using a second signal constellation having fewer points than said first signal constellation utilizing second data portions representing a respective quadrant within said first constellation in which said second constellation is disposed, and in that the demodulator comprises means for deriving a replica of said first data portions and a replica of said second data portions from said modulated signal.

2.  Transmitter provided with a quadrature amplitude modulator for deriving a quadrature amplitude modulated signal using a first signal constellation from a digital signal, characterised in that the quadrature amplitude modulator comprises means for deriving the quadrature amplitude modulated signal by forming first data portions from the digital signal and means for modulating said first data portion using a second signal constellation having fewer points than said first signal constellation utilizing second data portions representing a respective quadrant within said first constellation in which said second constellation is disposed.

3.  Receiver for receiving a quadrature amplitude modulated digital signal using a first signal constellation, said receiver comprising a quadrature amplitude demodulator for demodulating said modulated digital signal, characterised in that the demodulator comprises means for deriving second data portions indicating the quadrant of said modulated signal, means for deriving from said quadrature modulated signal a further modulated signal represented by a second signal constellation having fewer points than said first signal constellation and means for demodulating first data portions from said further modulated signal.

4.  Digital transmission method which comprises deriving a quadrature amplitude modulated signal using a first signal constellation from a digital signal, transmitting said quadrature amplitude modulated signal, deriving a demodulated digital signal from a received quadrature amplitude modulated signal, characterised in that the method comprises forming first data portions from the digital signal and deriving the quadrature amplitude modulated signal by modulating said first data portion using a second signal constellation having fewer points than said first signal constellation utilizing second data portions representing a respective quadrant within said first constellation in which said second constellation is disposed, and in that the method comprises deriving a replica of said first data portions and a replica of said second data portions from said modulated signal.

5.  Method for transmitting a quadrature amplitude modulated signal using a first signal constellation, characterised in that the method comprises deriving the quadrature amplitude modulated signal by forming first data portions from the digital signal and modulating said first data portion using a second signal constellation having fewer points than said first signal constellation utilizing second data portions representing a respective quadrant within said first constellation in which said second constellation is disposed.

6.  Method for receiving a quadrature amplitude modulated digital signal using a first signal constellation, said method comprises demodulating said modulated digital signal, characterised in that the method comprises deriving second data portions indicating the quadrant of said modulated signal, deriving from said quadrature modulated signal a further modulated signal represented by a second signal constellation having fewer points than said first signal constellation and means for demodulating first data portions from said further modulated signal.

2 BITS AT SYMBOL RATE

SERIAL
TO
PARALLEL
CONVERTER

TRELLIS
ENCODER

128 QUAM
MODU-
LATOR

TO UP
CONVERTER

SERIAL INPUT DATA

FIG.1

7

4

Q

1001110 1011110 1001111 1011111          1101110 1111110 1101111 1111111

1001100 1011100 1001101 1011101 1001011 1011011          1101100 1111100 1101101 1111101 1101011 1111011

1011000 1001000 1011001 1001001 1010011 1000011          1111000 1101000 1111001 1101001 1110011 1100011

$V_Q$

1001010 1011010 1000000 1010000 1000001 1010001          1101010 1111010 1100000 1110000 1100001 1110001

1010010 1000010 1010100 1000100 1010101 1000101          1110010 1100010 1110100 1100100 1110101 1100101

$d_1$          $d_1$

1010110 1000110 1010111 1000111          1110110 1100110 1110111 1100111

$d_2$

$d_2$

$-V_I$          $d_2$          0          $V_I$          I

$d_2$

0001110 0011110 0001111 0011111          0101110 0111110 0101111 0111111

$d_2$

0001100 0011100 0001101 0011101 0001011 0011011          0101100 0111100 0101101 0111101 0101011 0111011

0011000 0001000 0011001 0001001 0010011 0000011          0111000 0101000 0111001 0101001 0110011 0100011

$-V_Q$

0001010 0011010 0000000 0010000 0000001 0010001          0101010 0111010 0100000 0110000 0100001 0110001

0010010 0000010 0010100 0000100 0010101 0000101          0110010 0100010 0110100 0100100 0110101 0100101

0010110 0000110 0010111 0000111          0110110 0100110 0110111 0100111

6

5

# FIG.2

FIG.3

FIG.4

| DOCUMENTS CONSIDERED TO BE RELEVANT | | | EP 94202429.0 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| A | EP - A - 0 525 641 (GENERAL INSTRUMENT) * Abstract; page 3, line 3 - page 5, line 2; fig. 1-4; claims 1,5, 8,12 * -- | 1,4 | H 04 L 27/34 |
| A | WO - A - 92/10 899 (OTC) * Abstract; page 1, line 3 - page 2, line 22; fig. 1-4; claims 1-3 * -- | 1,4 | |
| A | EP - A - 0 283 725 (FUJITSU) * Abstract; column 1, line 6 - column 2, line 19; fig. 1,2,5,6,10; claim 1 * -- | 1,4 | |
| A | EP - A - 0 506 400 (MATSUSHITA) * Abstract; page 2, line 5 - page 3, line 51; fig. 1,2,17,19,21,26,29; claims 1,5,10 * ---- | 1,4 | TECHNICAL FIELDS SEARCHED (Int. Cl.6) H 04 L H 04 N |

The present search report has been drawn up for all claims

| Place of search | Date of completion of the search | Examiner |
|---|---|---|
| VIENNA | 22-11-1994 | BADICS |

EPO FORM 1503 03.82 (P0401)